# EUROPEAN PATENT APPLICATION

(11) **EP 2 529 644 A1**
(43) Date of publication of application: **05.12.2012**
(21) Application number: 12164545.1
(22) Date of filing: 18.04.2012
(51) Int. Cl.: A47B 95/00

(54) **Hidden hanging bracket device for the wall assembly of structural components of pieces of furniture**

(30) Priority: 01.06.2011 IT MI20111001
(71) Applicant: LEONARDO S.r.l., 22060 Figino Serenza, CO (IT)
(72) Inventor: Cattaneo, Carlo, 22060 Figino Serenza (IT)
(74) Representative: Martegani, Franco

(57) **Abstract**

A hidden hanging bracket (D) for the wall assembly of structural components of a piece of furniture (M) comprises supporting means (1; 10) suitable for being coupled with a component (3) of said piece of furniture (M); coupling and fixing means (4; 16, 12) of said supporting means (1; 10) to said component (M); and hooking means (7; 13) held by said means (1; 10) for hanging the piece of furniture (M) to the wall. According to the invention, the device also comprises stable blocking means (19) of said means (4; 16, 12) to said component (3) of the piece of furniture (M).

## Description

The present invention relates to a hidden hanging bracket device for the wall assembly of structural components of pieces of furniture, particularly but not exclusively wall cupboards.

The present invention is advantageously used for obtaining a stable fixing of a cupboard, and/or part of it, to the wall.

The invention relates in particular to so-called hidden hanging brackets, assembled behind a lining of a wall cupboard, and/or inserted inside a seat positioned inside a shoulder, or upright which are at present mainly produced in wooden chipboard, or wood derivatives such as panels known on the market with the abbreviation MDF (Medium-density fibreboard).

Hidden hanging brackets of the above type can comprise a supporting body suitable for being inserted and fixed inside a seat situated inside a shoulder of a piece of furniture.

Devices of this type are commonly called shoulder-centre brackets.

A shoulder-centre bracket of the known type is described and illustrated for example in Italian patent application MI2010A001884, filed on October 15, 2010, in the name of the same applicant.

Hanging brackets positioned behind the lining of a piece of furniture and fixed to the shoulder by means of pins that extend laterally from a flange, or base, forming the body of the same hanging bracket, are also known. These pins are inserted with interference inside corresponding seats situated in the shoulder of the piece of furniture.

The pins can be constrained inside said seats by means of screws passing through transversal holes envisaged in the pins themselves.

A hanging bracket of this type is described and illustrated for example in patent application PCT/IB2008/003334, filed on December 2, 2008, in the name of the same applicant.

Both of the above hanging brackets are provided with hook elements, adjustable in height (vertically) and depth (horizontally), suitable for being hooked to a support fixed to the wall, for example a plate, bar, peg, or equivalent element.

For further details on the type of hanging brackets briefly described above, reference should be made to the above Italian patent applications and PCT, which should be considered an integrant part of the present description.

Although the functioning of the hidden hanging brackets of the known type is completely satisfactory, they can have the serious drawback that the fixing screws to the shoulder, above all in the presence of wooden chipboard, tend to slacken, with the consequent falling of the cupboard due to the detachment of the bracket, which remains hooked to the wall support, whereas the cupboard falls.

It should also be pointed out that in the case of hanging brackets positioned behind the lining, with fixing pins having transversal anchorage holes by means of accessory pass-through screws, these screws may not be used by the assembler, or they may be used incorrectly, as they must pass exactly through the relative hole in the pin, in order to exert their blocking function (anchorage).

A general objective of the present invention is to eliminate the above serious drawbacks of the known art described above.

More specifically, an objective of the present invention is to provide a hanging bracket which guarantees an optimal fixing stability with time of the various components of the piece of furniture, also under conditions of considerable loading stress, and also in cases - the most frequent - in which the components are chipboards.

A further objective of the present invention is to provide a hanging bracket device that is easy to assemble and that can be easily anchored to the component of the piece of furniture, at the same time guaranteeing rapid and precise assembly operations.

The above objectives are achieved by a hidden hanging bracket having the characteristics specified in the enclosed claim 1 and subclaims.

The structural and functional characteristics of the present invention and its advantages with respect to the known art will appear even more evident from the following description, referring to the enclosed schematic drawings, which show practical embodiments of hidden hanging brackets produced according to the invention.

In the drawings:
- figure 1 is an exploded perspective view illustrating a hidden shoulder-centre bracket produced according to a first embodiment of the invention;
- figure 2 is a raised front view of the hanging bracket of figure 1, assembled;
- figure 3 is a vertical section according to the traces III-III of figure 2;
- figure 4 is an enlarged section according to the traces IV-IV of figure 3;
- figure 5 is an exploded perspective view showing a hidden hanging bracket according to a second embodiment of the invention;
- figure 6 is a raised front view of the hanging bracket of figure 1, assembled;
- figure 7 is an enlarged section according to the traces VII-VII of figure 6;
- figures 8a-8e are enlarged details showing the blocking system of the fixing screws of the hidden hanging shoulder-centre bracket of figures 1-4;
- figure 9a-9e are enlarged details showing the blocking system of the fixing screws of the hidden shoulder-centre bracket of figures 5-7; and
- figures 10a-10e are enlarged details illustrating a possible variant of the blocking system of the fixing screws of hidden hanging brackets according to the present invention.

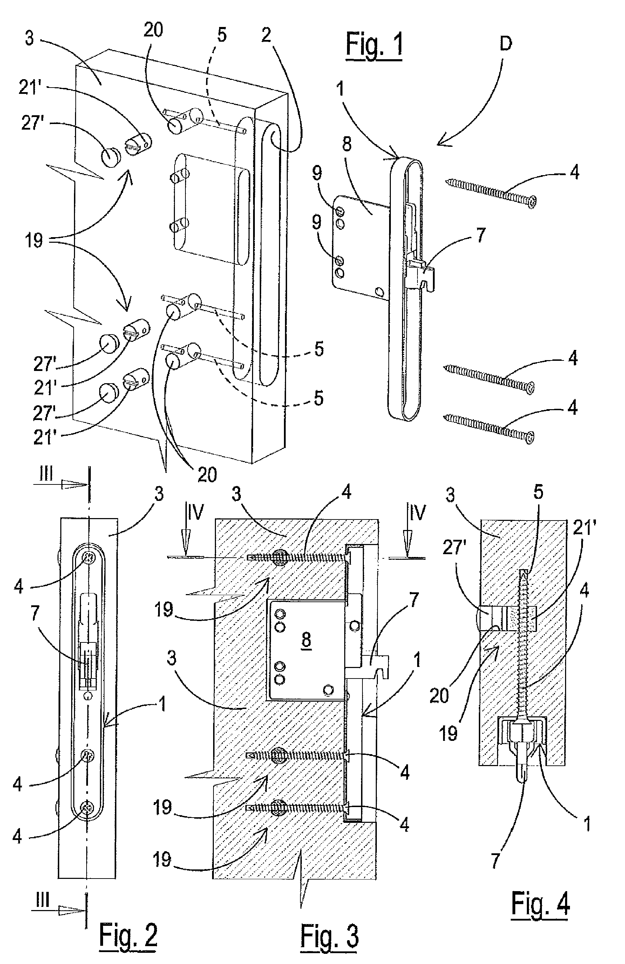

With reference first of all to figures 1-4, D indicates as a whole a hidden shoulder-centre bracket for the wall assembly of a cupboard (not shown).

According to the embodiment illustrated in said figures 1-4, the wall cupboard D comprises a box-shaped supporting upright 1 suitable for being housed inside a seat 2 situated inside a shoulder 3 of the cupboard, and fixed thereto by means of screws 4 (for example three), which are introduced into respective holes 5 (dashed in figure 1) situated in the above shoulder 3.

A flat body 8 is fixed to the upright 1, from which connection means to the wall extend, for example moveable hooking elements 7, suitable for being hooked, in the known way, for example, to a bar, peg or other similar elements (not illustrated) fixed to a wall, also not illustrated.

The hooking element 7 can be regulated, in depth and height, by mechanisms of the known type contained inside the body 8, and accessible through holes 9 situated in one of the two half-shells forming the same body 8.

A shoulder-centre bracket of this known type, as already specified, is described for example in Italian patent application M12010A001884, filed on October 15, 2010 in the name of the same applicant.

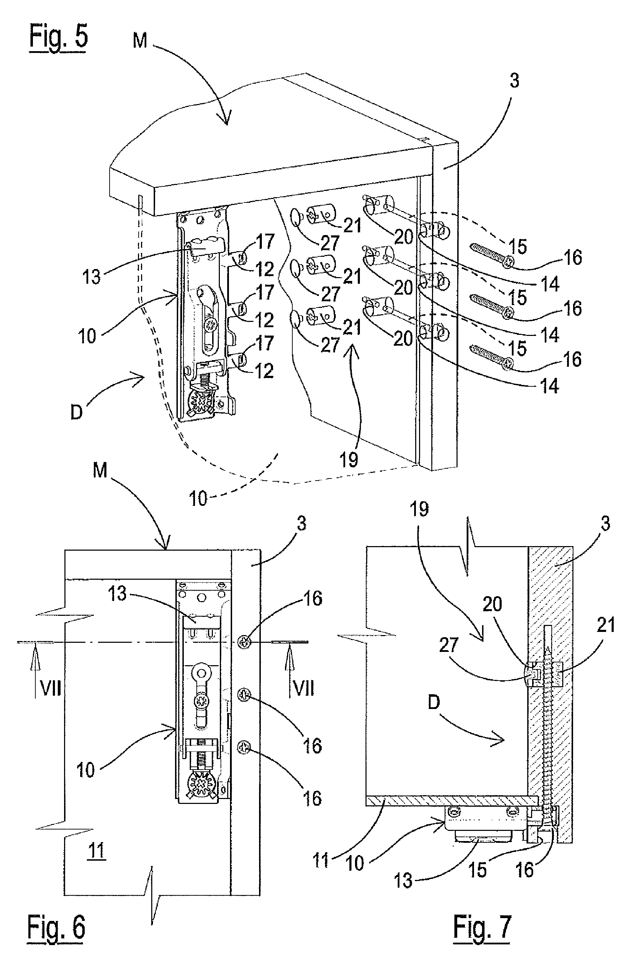

Another type of hidden shoulder-centre bracket D is illustrated in figures 5-7, said hanging bracket being described in the above-mentioned international patent application PCT/IB2008/003334, filed on December 2, 2008, in the name of the same applicant.

As will appear evident to experts in the field, the hidden hanging bracket illustrated in figures 5-7 is not a so-called shoulder-centre bracket, but is of the type which is fixed laterally to the shoulder 3 of a cupboard M, and hidden by a rear lining 11.

More specifically, said hanging bracket comprises a supporting plate or base 10 suitable for being fixed to the shoulder 3 by means of a plurality of coupling and fixing pins 12 (for example three, as shown in figure 5) extending laterally from the same base 10.

The base 10 carries a hooking element 13, whose position can also be regulated in height and depth, suitable for being hooked to a wall support.

As can be clearly seen in figures 5-7, said pins 12 are suitable for being introduced, with interference, into relative seats 14 situated in the shoulder 3.

Furthermore, anchoring screws 16 pass through the pins 12, in turn passing through holes 15 and 17 situated in the panel 3 and same pins respectively.

What is described above, with reference to the hidden hanging brackets illustrated in figures 1-7, is known art.

According to the present invention, the hidden hanging brackets D illustrated in figures 1-7 also comprise blocking means suitable for creating a stable constraint of the screws 4, 16 housed in the holes 5, 15 of the shoulder 3, in order to avoid slackening or unthreading of the same screws from the respective seats.

More specifically, said blocking means comprise means 19 suitable for being coupled with the above screws 4, 16, transversally with respect to the same, in order to firmly block (tighten) the screws in position; the blocking means 19 are inserted in corresponding seats 20 situated in the shoulder 3 of the cupboard M transversally with respect to the holes 5, 15, (as can be clearly seen in figures 1, 3, 4, 5 and 7), intersecting them.

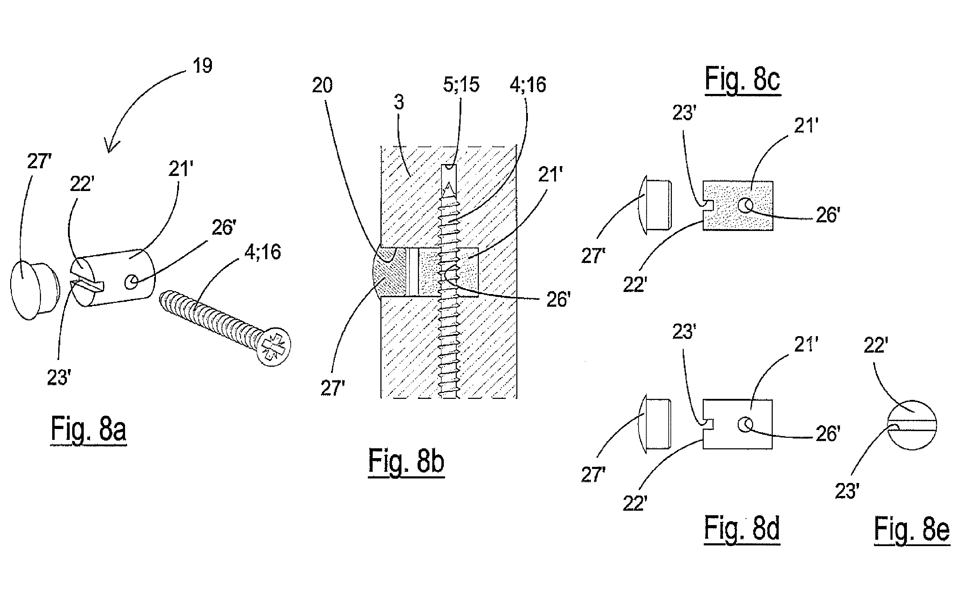

According to a first embodiment of the invention, illustrated in figures 8a to 8e, the coupling means 19 comprise, to be coupled with each screw 4;16, a bush 21' provided on its flat outer surface 22', with a transversal notch 23', suitable for being engaged, in use, by the tip of a tool (screwdriver), and a diametric pass-through hole 26', positioned parallel to the notch 23', and suitable for being engaged and crossed by the screw 4;16, as will be described in more detail hereunder.

An aesthetic cover 27' is also coupled with the bush 21', suitable for being inserted on the bush 21' to cover the whole of the surface 22', consequently hiding the same bush 21', once the same bush 21' has been operatively inserted in the relative seat 20 (figure 8b).

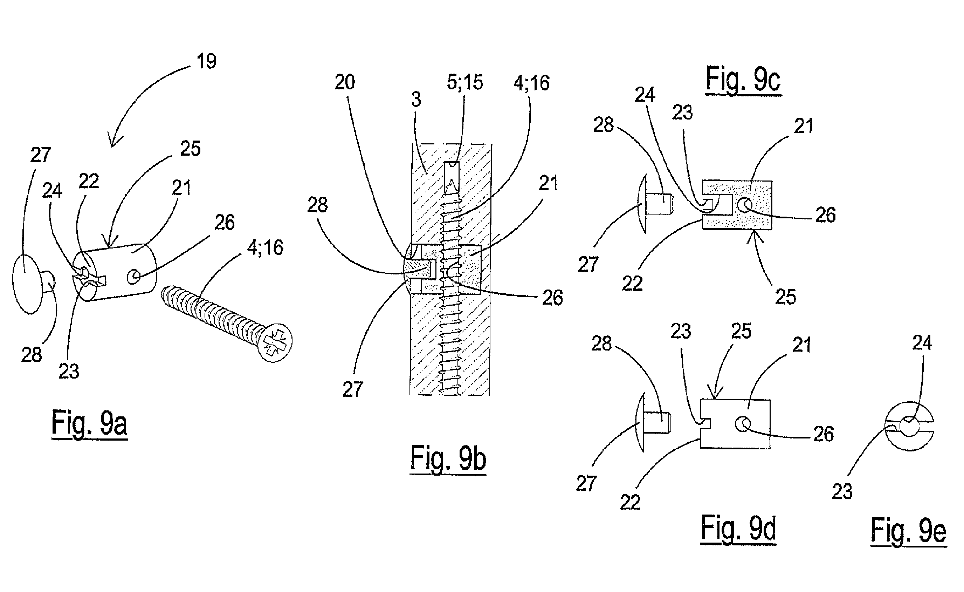

According to a second embodiment of the invention, illustrated in figures 9a to 9e, the blocking means 19 comprise, to be coupled with each screw 4;16, a bush 21 provided on its flat outer surface 22, with a transversal notch 23, suitable for being engaged by the tip of a tool (screwdriver), and an axial dead hole 24 situated at the centre of said notch 23, having a greater depth with respect to that of the same notch 23; furthermore, the bush 21 has, on its outer peripheral cylindrical surface 25, a diametric pass-through hole 26, positioned parallel to the notch 23 and orthogonal to the hole 24, and suitable, in use, for being engaged and crossed by the screw 4;16, as described in more detail hereunder.

A mushroom-shaped aesthetic cover 27 is also coupled with the bush 21, suitable for being inserted on the bush 21 to cover the whole of the above surface 22, and with its own stem 28 inserted in the hole 24, to hide the same bush 21, once the same bush 21 has been operatively inserted in the relative seat 20 (figure 9b).

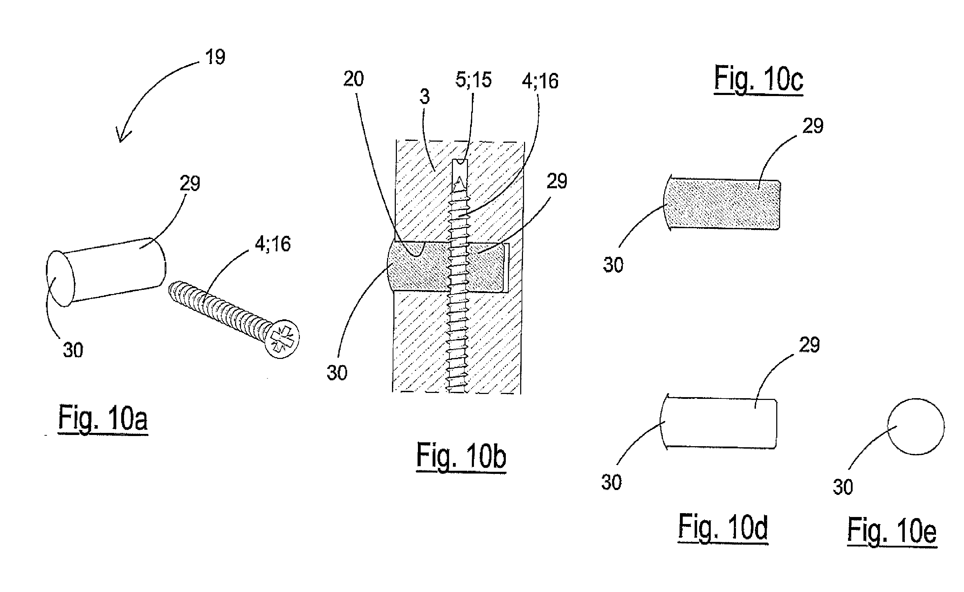

According to a third embodiment of the invention, illustrated in figures 10a to 10e, the means 19 comprise, for each screw 4;16, a solid insert 29, preferably cylindrical, provided with a lid-shaped end 30, made entirely of a perforatable material, for example plastic or materials with a perforatable structure, suitable, in use for being inserted in the relative seat 20 (figure 10b).

According to the present invention, as clearly illustrated in the drawings, the assembly of the hanging bracket device D, once the support 1 has been inserted in the relative seat 2 of the shoulder 3 (figure 1), or alternatively, once the base 10 has been fixed to the shoulder 3, by insertion of the pins 12 into the relative seats 14, (figure 5), prepares the blocking means 19 (tightening) by inserting them into the seats 20, or introducing each bush 21;21' into the relative seat 20 arranging it with its notch 23;23' parallel to the cavity 5;15 (figures 8b, 9b), i.e. so that the relative hole 26;26' is communicating and aligned with the same cavities 5,15, or introducing each pawl 29 into the relative seat 20 (figure 10b).

The hidden hanging bracket D is then definitively fixed to the shoulder 3, through the progressive screwing of the screws 4;16 into the cavities or holes 5;15.

In this way, each screw 4;16 passes through the bushes 21;21', or perforates the pawl 29 passing through it, after which each screw 16 is also inserted in the holes 17 of the pins 12, in the case of the embodiment illustrated in figure 7, thus causing a firm tightening capable of preventing any movement in an axial direction of the screws 4;16 and therefore providing an effective and stable fixing of the cupboard with time, also under considerable load conditions.

The assembly is completed by a simple and rapid insertion of the covers 27;27' to cover the bushes 21; 21' and hide them from sight, and subsequently with the final anchoring of the cupboard to the wall M by the above-mentioned hooking means.

The invention thus conceived can undergo numerous modifications and variants, all included in the scope of the inventive concept; furthermore, all the details can be substituted by technically equivalent elements.

The objective indicated in the preamble of the description has therefore been achieved.

The protection scope of the present invention is defined by the enclosed claims.

## Claims

1. A hidden hanging bracket (D) for the wall assembly of structural components of a cupboard (M) comprising supporting means (1; 10) suitable for being coupled with a component (3) of said cupboard (M); coupling and fixing means (4; 16, 12) of said supporting means (1; 10) to said component (M); and hooking means (7; 13) held by said means (1; 10) for hanging the cupboard (M) to the wall; the device being **characterized in that** it also comprises stable blocking means (19) of said means (4; 16, 12) to said component (3) of the cupboard (M).

2. The wall hanging bracket according to claim 1, **characterized in that** the coupling and fixing means (4; 16, 12) comprise screws (4; 16); and said blocking means (19) comprise inserts inserted in corresponding seats (20) present in said component (3) in order to be coupled with said screws (4; 16).

3. The wall hanging bracket according to claim 2, **characterized in that** said inserts comprise bushes (21, 21') suitable for being coupled with said screws (4; 16).

4. The bracket according to claim 3, **characterized in that** said bushes (21, 21') comprise at least one bush (21) provided, on its flat outer surface (22), with a transversal notch (23), an axial dead hole (24) situated at the centre of said notch (23) having a greater depth with respect to that of the same notch (23), and having, on its outer peripheral surface (25), a pass-through hole (26), positioned parallel to said notch (23) and orthogonal to said axial hole (24); said screws (4; 16) passing through said pass-through hole (26).

5. The bracket according to claim 4, **characterized in that** said bush (21) also comprises a cover (27) substantially mushroom-shaped, suitable for being inserted on said bush (21) to entirely cover said flat surface (22), and with one of its ends (28) inserted in said axial hole (24).

6. The bracket according to claim 3, **characterized in that** said bushes (21, 21') comprise at least one bush (21') having a transversal notch (23') on its outer flat surface (22'), and a pass-through hole (26'), situated parallel to said notch (23'), on its peripheral surface (25'); said screws (4;16) passing through said pass-through hole(26').

7. The bracket according to claim 6, **characterized in that** said bush (21') also comprises a cover (27')inserted on the bush (21') so as to completely cover said outer flat surface (22').

8. The bracket according to claim 2, **characterized in that** said blocking means (19) comprise at least one element (29) made of a perforatable material through which said screws (4; 16) pass.

9. The bracket according to any of the claims from 2 to 8, **characterized in that** said supporting means (1; 10) comprise a box-shaped supporting upright (1) suitable for being housed in a seat (2) situated inside a shoulder (3) of the cupboard (M), and fixed therein by means of said screws (4), which are introduced into respective holes (5) situated in the above shoulder (3), a flat body (8) being fixed to said upright (1), from which said hooking elements (7) extend, which can be adjusted in depth and in height, by means of mechanisms contained inside the body (8) and accessible through holes (9) situated in the same.

10. The bracket according to any of the claims from 2 to 8, **characterized in that** said supporting means (1; 10) comprise a supporting plate or base (10) suitable for being fixed to the shoulder (3) by means of a plurality of coupling and fixing pins (12) extending laterally from the same base (10), said base (10) carrying a hooking element (13), whose position can be adjusted in height and depth, said pins (12) being suitable for being introduced, with interference, into relative seats (14) situated in the shoulder (3), through which anchoring screws pass (16), passing through holes (15; 17) situated in the panel (3) and pins (12), respectively.
